# EUROPÄISCHE PATENTANMELDUNG

(11) **EP 1 111 372 A1**
(43) Veröffentlichungstag der Anmeldung: **27.06.2001**
(21) Anmeldenummer: 00126803.6
(22) Anmeldetag: 06.12.2000
(51) Int. Cl.: G01N 21/39

(54) **Verfahren zur Signalbearbeitung in der Laserspektroskopie**

(30) Priorität: 22.12.1999 DE 19962178
(71) Anmelder: SIEMENS AKTIENGESELLSCHAFT, 80333 München (DE)
(72) Erfinder: Chemisky, Eric, 67500 Haguenau (FR); Magori, Erhard, 85551 Kirchheim (DE); Meixner, Hans, Prof., 85540 Haar (DE); Strzoda, Rainer, 81825 München (DE)

(57) **Zusammenfassung**

Bei der optischen Gasdetektion mittels der direkten Spektroskopie ist beim Einsatz von durchstimmbaren Laserdioden eine kleine Signaländerung auf einem hohen Signalpegel zu detektieren. Um den Hardware-Aufwand zu minimieren, werden AD-Wandler eingesetzt, deren Auflösung kleiner ist als die zu messenden Extinktionen. Auf einen vorgeschalteten Differenzverstärker wird die Signalspannung U_{Signal} gelegt. Auf den Referenzeingang des Differenzverstärkers wird eine Vorspannung Uᵥ gelegt, so daß nur noch der tatsächlich auftretende Signalhub auf den Wandelbereich des AD-Wandlers abgebildet wird.

## Beschreibung

Die Erfindung betrifft ein Verfahren zur Signalauswertung in der Laserspektroskopie, wobei in der Regel kleine Signaländerungen auf einem hohen Pegel detektiert werden müssen.

Die optische Gasdetektion wird bevorzugt im mittleren Infrarotbereich des Lichtes durchgeführt. Bei höchsten Anforderungen an die Selektivität wird bevorzugt die Laserspektroskopie angewandt. Die Laserspektroskopie mit Laserdioden für die Gasanalyse wird jedoch erschwert durch Nichtlinearitäten der beteiligten Bauelemente wie Meßkammer, Fotodetektor und Laserdiode. Bei einem Laser steigt beispielsweise die Ausgangsleistung oberhalb der Laserschwelle in erster Näherung linear mit dem Laserstrom an. Mit zunehmendem Strom stellt sich eine sublineare Zunahme der Ausgangsleistung mit dem Strom ein, die soweit geht, daß die Ausgangsleistung ein Maximum durchläuft und dann wieder abnimmt. Neben dieser groben Abweichung vom linearen Verlauf der Kennlinie gibt es auch Abweichungen höherer Ordnung, die sich bei der Messung kleiner Absorptionen störend auswirken. Somit liegt insgesamt kein konstantes Hintergrundspektrum vor.

Absorptionsmessungen im mittleren Infrarotbereich werden beispielsweise mit Bleisalzlasern durchgeführt, die allerdings wegen der notwendigen Kühlung aufwendig und teuer sind. Im nahen Infrarotbereich bis ca. 2 µm Wellenlänge können Laserdioden eingesetzt werden, die bei Raumtemperatur arbeiten. Nachteilig erweisen sich die geringen Linienstärken im Spektrum der meisten Moleküle im Nah-Infrarot-Bereich. Somit treten geringe Extinktionen von weniger als 10⁻⁴ auf, die detektiert werden müssen. Somit spielt die Nachweisempfindlichkeit eines Gasdetektionssystemes dieser Art bei der entsprechenden Absorptionswellenlänge eines Gases im unteren ppm-Bereich eine wesentliche Rolle.

Bei der direkten Spektroskopie muß ein großes Signal verarbeitet werden, dem eine kleine Signaländerung, die Extinktion durch ein in einer Absorptionsstrecke vorhandenes Gas, überlagert ist. Beide Signale müssen ausgewertet werden. Üblicherweise wird das verstärkte Fotodiodensignal analog/digital gewandelt. Um kleine Signaländerungen detektieren zu können, müssen Analog-/Digitalwandler mit hoher Auflösung eingesetzt werden.

Bisher bekannte Verfahren zur Absorptionsmessung sind neben der direkten Spektroskopie die Integrativspektroskopie, die Derivativspektroskopie und hochfrequente Modulationsverfahren. Die weiteste Verbreitung in der Anwendung hat bisher die Derivativspektroskopie erfahren. Man erreicht damit hohe Nachweisempfindlichkeiten bei moderatem Aufwand. Das Meßsignal wird dabei von einer relativ aufwendigen elektronischen Schaltung (Lock-In-Verstärker) ausgegeben. Bei den hochfrequenten Modulationsverfahren wird eine Modulation und Demodulation des Laserlichtes im MHz-Bereich benötigt. Die Signalaufbereitung erfolgt weitgehend mit Einsatz aufwendiger elektronischer Schaltungen. Einfache Elektronikschaltungen mit weitgehender Verlagerung der Signalaufbereitung auf Software-Verfahren sind noch nicht verbreitet.

In der europäischen Offenlegungsschrift EP 087 42 33 A1 wird beispielsweise die schmalbandige Messung von Spektrallinien bei der Absorption eines Gases unter Einsatz von Laserlichtquellen beschrieben. Dabei sind durch die spektral aufgelöste Messung einzelne Absorptionslinien meßbar und damit die Selektion einzelner Gaskomponenten.

Der Erfindung liegt die Aufgabe zugrunde, ein Verfahren zur Auswertung von in der Laserspektroskopie erhaltenen Signalen bereitzustellen, die eine Reduzierung des Hardware-Aufwandes ermöglichen.

Die Lösung dieser Aufgabe geschieht durch die Kombination der Merkmale entsprechend Anspruch 1. Vorteilhafte Ausgestaltungen sind den Unteransprüchen zu entnehmen.

Die Erfindung geht davon aus, daß bei der direkten Spektroskopie im Gegensatz zur Derivationsspektroskopie eine kleine Signaländerung auf einem hohen Signalpegel detektiert werden muß. Zur Auswertung eines derartigen Signales kann ein AD-Wandler eingesetzt werden, der jedoch in der Regel eine begrenzte Auflösung bietet. Ein 12 Bit-AD-Wandler begrenzt beispielsweise die minimal detektierbare Extinktion auf etwa 2,5·10⁻⁴. Diese Auflösung kann bis zu einem gewissen Grad durch Mittelung über mehrere Messungen erhöht werden. Die Erfindung basiert darauf, daß das Meßsignal (Spannung) gespreizt wird, so daß nur jeweils ein Teil der möglichen Signalspannung auf den Meßbereich des AD-Wandlers abgebildet wird. Bei einer Strommodulation der Laserdiode entspricht das Empfangssignal an der Fotodiode hinter einer Gasabsorptionsstrecke der Laserkennlinie, überlagert mit der Struktur der Absorptionslinie. Wegen der großen Amplitudenmodulation der Laserausgangsleistung tritt eine Signaländerung um beispielsweise einen Faktor von > 2 auf. Die Signalspannung U_{Signal} wird verstärkt und auf den Wandelbereich des AD-Wandlers abgebildet. Diese kann beispielsweise von 0-4 V reichen. Eine Erhöhung der Auflösung, beispielsweise um den Faktor 2, wird erreicht, wenn bei Zuführung der Signalspannung U_{Signal} an einen Differenzverstärker an dessen Referenzeingang eine Vorspannung U_{V} angelegt wird, so daß nur noch der tatsächlich auftretende Signalhub auf den Wandelbereich des AD-Wandlers abgebildet wird. Die somit eingeführte Referenz- oder Vergleichsspannung führt zu einer Steigerung der Auflösung, wobei gleichzeitig AD-Wandler mit relativ niedriger Auflösung eingesetzt werden können.

In einer vorteilhaften Ausgestaltung wird die Auflösung weiterhin verbessert, indem die Vorspannung U_{V} nicht konstant, sondern stufenförmig ausgebildet ist.

Ist beispielsweise die Auflösung detektierbarer Extinktionen von 10⁻⁵ (Tiefe der Absorption) gewünscht, so kann mit einem erfindungsgemäßen Verfahren anstelle eines 16 Bit- ein 8 oder 10 Bit-AD-Wandler eingesetzt werden.

Im folgenden wird anhand der begleitenden schematischen Figuren ein Ausführungsbeispiel beschrieben.
- Figur 1: zeigt das Empfangssignal bzw. die Laserkennlinie mit einem entsprechend einer Gasabsorption überlagerten Signal,
- Figur 2: zeigt die Beschaltung eines Differenzverstärkers entsprechend der Erfindung,
- Figur 3: zeigt die Nachführung der treppenförmig ausgebildeten Vorspannung U_{V},
- Figur 4: zeigt den Signalverlauf am Eingang eines AD-Wandlers entsprechend den Eingangsspannungen nach Fig. 3.

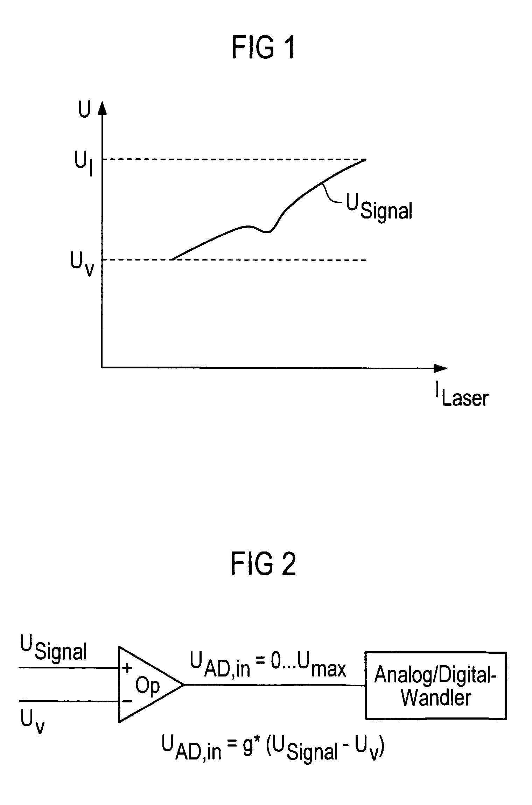

Ausgehend von einer direkten spektroskopischen Messung unter Einsatz einer spektral einmodigen Laserdiode, einer Absorptionsstrecke und einem Fotoempfänger wird ein Meßsignal in Abhängigkeit von dem Laserbetriebsstrom aufgenommen. Die Laserdiode wird durch Variation ihres Betriebsstromes bzw. ihrer Temperatur über einen spektralen Bereich durchgestimmt, der im Spektrum eines zu detektierenden Gases derart plaziert wird, daß eine zu detektierende Spektrallinie dieses Gases bei der Modulation überstrichen wird. Durch verschiedene Nichtlinearitäten im Meßsystem ergibt sich die Laserkennlinie mit überlagerter Gasabsorption entsprechend Figur 1. Dargestellt ist ein Fotodiodensignal mit entsprechender Spannung. Bei einem Verfahren entsprechend der Erfindung werden Extinktionen gemessen, die kleiner sind als die Auflösung eines eingesetzten AD-Wandlers.

Figur 2 zeigt die Beschaltung eines Operationsverstärkers, der als Differenzverstärker verwendet wird. Als Eingangsspannung wird die Signalspannung U_{Signal} aufgelegt. Zusätzlich wird am Referenzeingang des Differenzverstärkers eine Vorspannung U_{V} zugeführt. Der Arbeitsbereich der AD-Wandllung, d. h. daß einem AD-Wandler zugeführte Signal, reicht von 0 bis zur maximalen Spannung Uₘₐₓ. Das Eingangssignal für den AD-Wandler ergibt sich zu U_{AD,in} = g* (U_{Signal} - U_{V}).

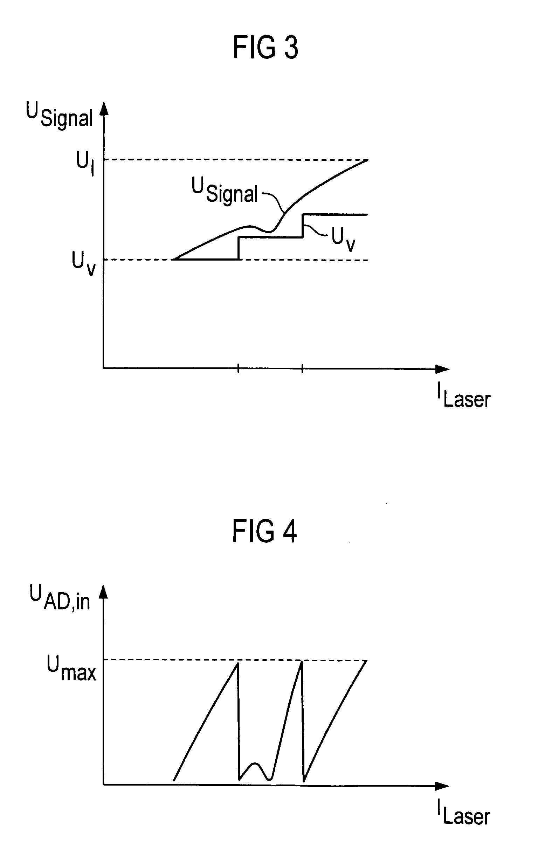

Abbildung 3 zeigt eine vorteilhafte Ausgestaltung der Erfindung mit der Nachführung einer Vorspannung U_{V}, die hier treppenförmig geschieht. Damit wird jeweils nur die Differenzspannung auf den Wandelbereich des AD-Wandlers abgebildet. g stellt in der obigen Gleichung die Verstärkung des Differenzverstärkers dar. Der Signalverlauf am Eingang eines AD-Wandlers geht aus Figur 4 hervor. Es läßt sich somit je nach Feinheit der Nachführung von U_{V}, entsprechend dem maximalen Spannungsunterschied, eine beträchtliche Steigerung der Auflösung erreichen.

Als Vergleichssignal kann auch das Signal einer Monitordiode verwendet werden. Die Monitordiode empfängt einen Teil der Laserstrahlung, der nicht die Gasmeßstrecke passiert. Damit liefert die Monitordiode die reine, ungestörte Laserkennlinie. In diesem Fall ist es möglich die Nichtlinearitäten der Laserkennlinie aus dem Meßsignal zu eliminieren.

## Patentansprüche

1. Verfahren zur Signalverarbeitung in der Laserspektroskopie bestehend aus folgenden Schritten:
- die Emissionswellenlänge von mindestens einer Laserdiode wird durch Variation ihrer Betriebstemperatur oder ihres Betriebsstromes derart durchgestimmt, dass das Spektrum der Absorptionslinie des zu detektierenden Gases überstrichen wird,
- mindestens ein Fotodetektor liefert ein Meßsignal welches aus der Kennlinie der Laserdiode mit der überlagerten Absorptionslinie des Gases besteht,
- das Meßsignal wird zusammen mit einer Vorspannung U_{V} an die Eingänge eines Differenzverstärkers gelegt, wobei die Differenz der beiden Spannungen auf den Eingang eines nachfolgenden AD-Wandlers gelegt wird,
- das Differenzsignal wird soweit verstärkt, dass dessen maximale Amplitude an den Eingangsspannungsbereich des A/D-Wandlers optimal angepaßt ist,
- das AD-gewandelte Meßsignal wird digital ausgewertet.

2. Verfahren nach Anspruch 1, wobei die Vorspannung U_{V} treppenförmig, linear oder in Form eines Polynomes höherer Ordnung nachgeführt wird.

3. Verfahren nach Anspruch 1, wobei anstelle einer Vorspannung U_{V} ein Signal einer Monitordiode eingesetzt wird.
